# EUROPEAN PATENT SPECIFICATION

(11) **EP 1 727 009 B1**
(45) Date of publication and mention of the grant of the patent: **05.05.2010**
(21) Application number: 06010481.7
(22) Date of filing: 22.05.2006
(51) Int. Cl.: G05B 23/02, G05B 19/418

(54) **System for displaying alarms and related information for supporting process operation**
Vorrichtung zur Anzeige von Alarmen und zugehöriger Information zur Unterstützung des Betriebs einer industriellen Anlage
Système pour la visualisation d'alarmes et d'informations reliées pour supporter l'opération d'une installation industrielle

(30) Priority: 23.05.2005 JP 2005148873
(43) Date of publication of application: 29.11.2006
(73) Proprietor: Yokogawa Electric Corporation, Tokyo 180-8750 (JP)
(72) Inventor: Sato, Keiji, Musashino-shi Tokyo 180-8750 (JP); Matsuno, Takuya, Musashino-shi Tokyo 180-8750 (JP); Ohashi, Masayasu, Musashino-shi Tokyo 180-8750 (JP)
(74) Representative: Grünecker, Kinkeldey, Stockmair & Schwanhäusser Anwaltssozietät

(56) References cited:
- WO-A-03/075206
- WO-A-2004/027531
- US-A- 5 777 896
- US-A1- 2003 014 130
- US-A1- 2004 181 294
- US-B1- 6 414 594
- US-B1- 6 633 782

## Description

### Background of the Invention

### Field of the Invention

The present invention relates to a process abnormal condition recovering operation supporting system capable of supporting operator's judgment at a time of abnormality occurrence in a plant by automatically displaying information required to deal with such abnormality urgently.

### Description of the Related Art

The following documents are associated with the plant operation supporting apparatus as a related art.
Document 1: Yokogawa Technical Report Vol.41 No.4(1997)115/119 Unsteady Operation Supporting Package Exapilot (URL http://www.yokogawa.co.jp/rd/pdf/tr/rd- tr-r04104-004.pdf)
Document 2: Yokogawa Technical Report Vol.47 No.4(2003)129/132 Exaquantum Equipment Trend Analyzing Package and its practical cases (URL http://www.yokogawa.co.jp/ rd/pdf/tr/rd-tr-r04704-003.pdf) Document 3: JP-A-10-74109

The unsteady operations typified by start-up, shut-down, load change, grade change, and the like, the measures against process malfunction, equipment failure, control malfunction, etc. caused in the steady operation, auxiliary operation of control, etc. belong to the operation range that is often still executed mainly based on the manual operation. Therefore, unevenness (control instability, operation hour loss, product quality loss, utility loss, operation omission, or the like) in an operation quality is produced according to a difference in the operator's skill. This yields a bottleneck in improving an operation efficiency.

For example, in the distributed control apparatus, the operator must take the operation manually to recover the process abnormal condition at various locations in response to generation of the alarm in the apparatus, the step transition notice, or the like. However, the manual operation largely depends on the versed operator's skill. For this reason, the operation automating package that can execute operation procedures of the skilled operator on a systemized personal computer is provided as the operating efficiency improvement supporting software.

In Document 1, a product outline of "Exapilot" (registered trademark) is introduced. This product consists of a plurality of solution packages using the knowledge-based system as a key word, and supports the steady operation and the unsteady operation in the operation ranges, which are handled mainly by the operator, from both monitor and control aspects.

In Document 2, a product outline of a facility trend analyzing package "Exaquantum" (registered trademark) is introduced. This product aims at attaining support of daily equipment maintenance work, improvement in operation management efficiency, energy saving, and cost saving by grasping long/short-period trends of the production facilities visually and numerically.

In Document 3, such a technology is set forth that can check an alarm generating situation instantly at a time of emergency, which results in the shut-down of the plant, based on the system-associated alarm by offering the system-associated alarm, via which the defective system can be recognized, on a display monitoring panel and displaying the individual alarm generated in the system on a displaying section (CRT) and also can reduce the operator's or manager's burden at a time of plant failure by checking the individual alarm displayed on the displaying section (CRT) when an enough time still remains or when the cause is cleared up.

US 6,633,782 B1 discloses a diagnostic system for use in a process control system, which collects and stores in a database information pertaining to the operation of the process control system, and that uses an expert engine to apply rules for analysis to the information in the database to determine solutions to problems. The database stores various types of information such as event and alarm data, notices of scheduled maintenance and changes to operating parameters, and historical data related to previous changes to the process control system that are relevant to determining both the source of the problems detected in the process control system and the steps necessary to either further analyze or correct the detected problems. The diagnostic system identifies the source of the problem and identifies and runs the appropriate analytical tools or takes remedial measures based on the rules for analysis for the expert engine.

US 5,777,896 A discloses an apparatus for operating and monitoring a plant, a manipulating device provides the plant with manipulation signals for operating the plant. In response to information supplied from the plant and a manipulating signal of the manipulating device, a first display data producing device produces first display data needed for the operation of the plant changing every moment. On the basis of data supplied from the first display data producing device, a first display device displays information relating to the operation of the plant. In response to information supplied from the plant and a manipulating signal of the manipulating device, a second display data producing device produces data needed for monitoring the plant. On the basis of data supplied from the second display data producing device, a second display device displays information relating to the monitoring of the plant on a larger display screen than that of the first display device. Information displayed by the first display device and information displayed by the second display device complement each other and make it possible to accurately operate and monitor the plant.

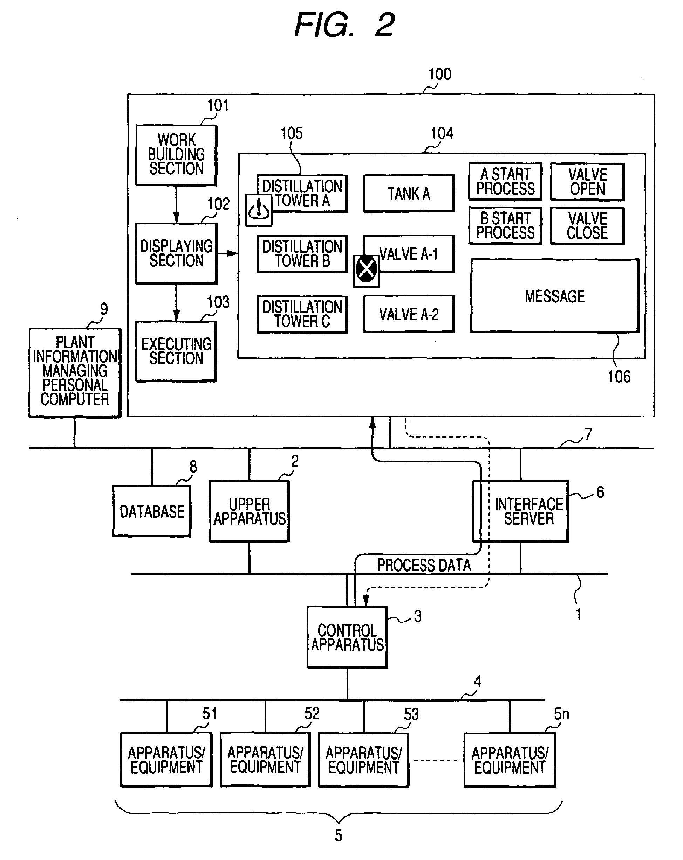

FIG.2 is a functional block diagram showing an example of the distributed control apparatus including the plant operation supporting apparatus 100 in the related art. An upper apparatus 2 for taking charge of operation/monitoring, and control apparatus 3 arranged in a distributed fashion within the plant are connected to a control bus 1.

The control apparatus 3 takes charge of control of a plurality of apparatus/equipments 51, 52, 53, ..., in a plant 5 via an I/O bus 4, and transfers process data (including event information such as the alarm, and the like) derived from the control result to the upper apparatus 2 via communication. The upper apparatus 2 executes the operation/monitoring.

Reference 6 denotes an interface server connected to the control bus 1. This interface server 6 has a function of collecting the process data from the control apparatus 3 and then providing the data to the upper user (referred to as a "client" hereinafter) side utilizing the process data.

The interface server 6 supplies the process data received from the control apparatus 3 via the control bus 1 to a personal computer (not shown) on the client side via the communication environment such as a general-purpose network 7, or the like. Reference 8 denotes a database that fetches periodically the process data from the interface server 6, and reference 9 denotes a plant information managing personal computer that executes the provision of strategic information.

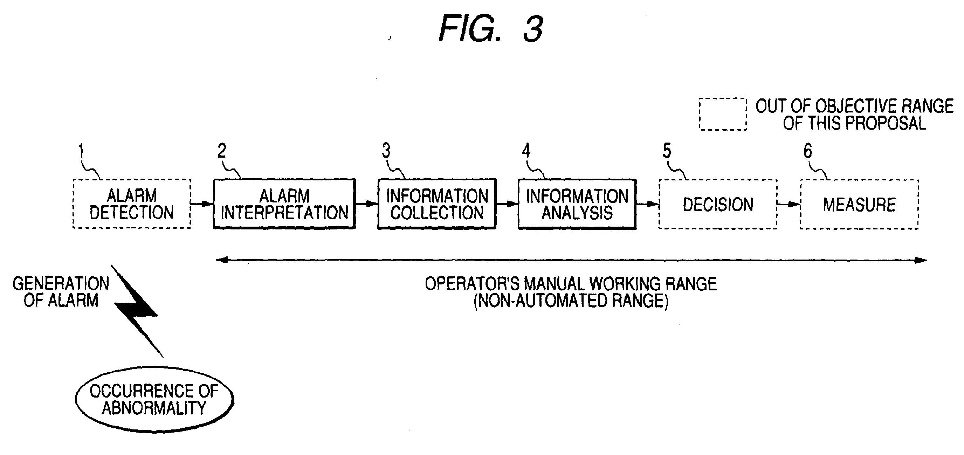

Meanwhile, in such operation supporting apparatus, a process abnormal condition recovering operation taken when the anomalous situation occurs in the process is carried out in compliance with a procedure shown in FIG.3.

In FIG.3, the alarm is generated when the failure occurs in the system. Then, in 1., the alarm is detected.

Then, in 2., it is interpreted to what category the alarm belongs.

Then, in 3., the information as to the alarm are collected.

Then, in 4., the information are analyzed.

Then, in 5., the operator decides what problem is indicated by the alarm.

Then, in 6., the measures are taken.

In this case, portions indicated by 2 to 6 in FIG.3 correspond to ranges in which the operator works manually, and portions 1, 5, 6 surrounded by a dotted line are out of the object of the present invention.

More particularly, in the alarm detecting stage in 1, HMI (Human Machine Interface) is informed of the alarm from DCS/PLC, or the like.

In the alarm interpreting stage in 2, the operator interprets the contents of the generated process alarm and specifies the alarm generating source process data.

In the information collection stage in 3, the operator calls manually the trend of the alarm generating source process data via HMI, and checks the data before and after the alarm is generated.

Also, the operator derived process data related to the alarm generating source process data (related process data) based on his or her own process knowledge.

In the information analyzing stage in 4, the operator specifies process data (alarm causing process data), which exhibits a different behavior from the normal one at first, out of the alarm generating source process data and the related process data.

Also, the operator searches an operation history manually and then checks whether or not the operation that may cause a variation in the alarm causing process data has been taken (Has the abnormality been caused due to the wrong operation of the operator ?).

In addition, the operator calls manually historical data of the alarm causing process data, and compares deviations and moving averages over a particular period.

In the deciding stage in 5, following items are studied.
a. Is the failure caused due to an unexpected fault of the equipment or a secular change ?
b. Is a malfunction of the software caused ?

In the measures taking stage in 6,
a. the case where the abnormality occurs due to the wrong operation of the operator→the operation of returning the process data to the normal one is executed, or
b. the case where the failure is caused due to the unexpected fault of the equipment or the secular change → the defective equipment is repaired.

Also, as the recurrence preventive measures, followings are taken.
a. When the related process data has not been registered on a historical database, the data is newly registered on the historical database.
b. An abnormality detecting logic is formed to prevent beforehand that the equipment runs into an abnormal event, and a verification of the abnormality detecting logic is carried out.

In the operation to deal with the above process abnormality, particularly the execution of the information collection/information analysis and the recurrence preventive measures, following problems lay.
(i) In the course of information collection, the operator must specify the alarm cause process data based on his or her own experience in a tense condition.
(ii) In the course of information analysis, the operator must search manually operation history, historical data, or the like in the alarm cause process data to find the traces acting as the cause of failure.
(iii) Further, the operator must specify the cause by considering the cause for himself or herself based on these raw data.

In the course of recurrence prevention, the operator must newly register manually the process data acting as the cause of the process abnormality at this time when such process data was not registered on the historical database.

In this manner, most of the works need the operator's own operation or judgment, while the computer is no more than an equipment that simply stores the information.

In order to make it possible to take the exact measures more effectively in an urgent situation, the positive operation support from the computer side is indispensable.

### Summary of the Invention

An object of the present invention is to provide a process abnormal condition recovering operation supporting system, capable of supporting a plant operator in taking prompt and exact works, particularly supporting respective works of information collection/information analysis and enforcement of the recurrence preventive measures.

The invention provides a process abnormal condition recovering operation supporting system, as defined in claim 1.

In the process abnormal condition recovering operation supporting system, the statistics calculating section of the information storing apparatus calculates at least a deviation and a moving average over a particular period, and determines short-period trends and long-term trends.

In the process abnormal condition recovering operation supporting system, the operation supporting apparatus has a discriminating section which discriminates between registered data and unregistered data, wherein the operation supporting apparatus writes data on the information storing apparatus when the discriminating section discriminates the data is unregistered data.

According to the process abnormal condition recovering operation supporting system, formatted operations out of recovering operations taken at a time of process abnormality occurrence can be displayed automatically in compliance with the predetermined procedures, and also short/long-period trends can be displayed by calculating the deviation or the moving average over the particular period.
a. The information collection work is automated, and the alarm cause process can be specified precisely and immediately. As a result, an error of judgment caused due to the lack of operator's skill/experience can be prevented.
b. Various data necessary for judgment of the cause can be provided automatically from the information storing apparatus side. Thus, the operator can be devoted to "judging" the cause within a limited time.
c. Since the operation histories in the past similar cases are also provided, the operator can select the more exact recovering operation.
d. Since the process data that are short in analyzing the cause are registered automatically on the historical database, the information collection can be conducted without fail at a time of next recurrence.

### Brief Description of the Drawings

FIG.1 is an explanatory view showing a concept of a process abnormal condition recovering operation supporting system according to the present invention;
FIG.2 is an explanatory view showing a configuration of a process abnormal condition recovering operation supporting system in the related art; and
FIG.3 is a view showing a process abnormal condition recovering operation when the abnormality occurs in the process.

### Detailed Description of the Preferred Embodiments

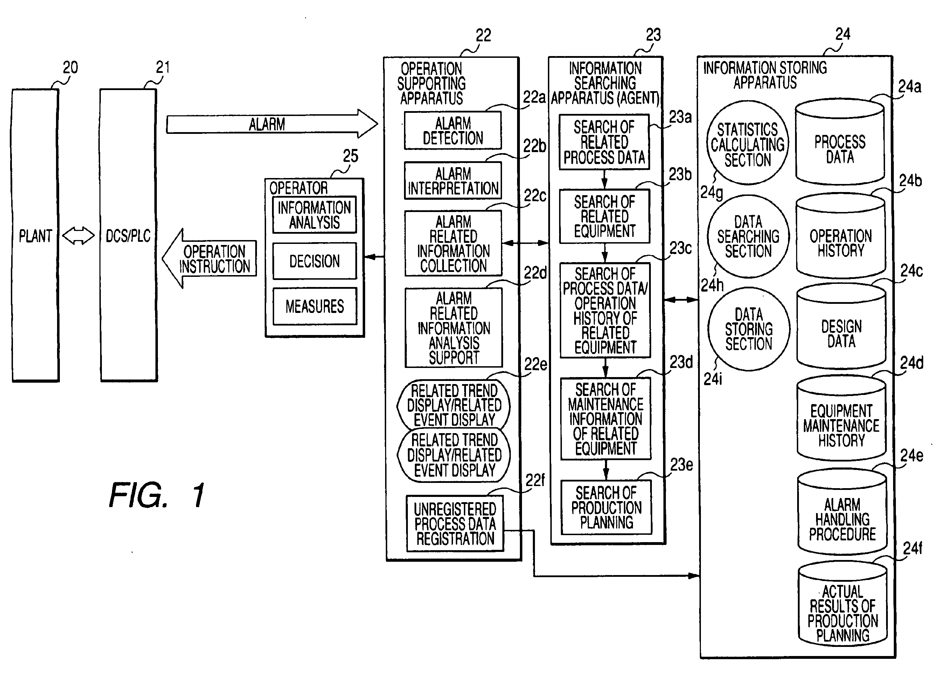

An embodiment of the present invention will be explained in detail with reference to the drawings hereinafter. FIG.1 is a view showing a concept of a process abnormal condition recovering operation supporting system according to the present invention.

In FIG.1, reference 20 denotes a plant to be managed, reference 21 denotes a control apparatus such as DCS/PLC, or the like for controlling the plant 20, and reference 22 denotes an operation supporting apparatus.

This operation supporting apparatus 22 is constructed to include an alarm detecting section 22a for detecting the alarm sent from the control apparatus 21, an alarm interpreting section 22b for interpreting the detected alarm, an alarm related information collecting section 22c for collecting information related to the alarm, an alarm related information analysis supporting section 22d for supporting analysis of the alarm related information, a related trend/related event displaying section 22e for displaying related trends and displaying related events, and an unregistered process data registering section 22f for registering unregistered process data on an information storing apparatus.

Reference 23 denotes an information searching apparatus (agent) for collecting the information based on an instruction from the operation supporting apparatus 22. This apparatus does not need operator's successive operations, and has a function that is capable of executing the information collection and the circumstantial judgment independently and executing adequate processing operations.

Therefore, this apparatus has a searching section including functions, for example,
23a. search of related process data,
23b. search of related equipment,
23c. search of process data/operation history of related equipment,
23d. search of maintenance information of related equipment, and
23e. search of production planning of the object plant.

Reference 24 denotes an information storing apparatus in which data including:
24a. process data,
24b. operation history,
24c. design data,
24d. equipment maintenance history,
24e. alarm handling procedure, and
24f. actual results of production planning
are stored. This information storing apparatus 24 includes a statistics calculating section 24g for executing statistics calculation based on these data, a data searching section 24h for executing a data search, and a data storing section 24i for executing processings such as data storing, and the like.

Reference 25 denotes contents of operator's work. The operator makes adequate decision/measures based on the contents of the trend and the event displayed on the displaying section of the operation supporting apparatus 22, and issues the operation instruction to the control apparatus 21.

In the above configuration, the operation supporting apparatus 22 receives the alarm from the DCS/PLC, and interprets automatically an object tag, an abnormality occurring time, contents of the alarm, etc. in the format.

Then, the alarm related information collecting section 22c is automatically searched. In this case, the contents are searched in response to the information that the process operator wants to get or the information that the process operator has to know.

The searched contents are displayed by the related trend/related event displaying section 22e.

Here, the information that are to be searched according to the alarm contents correspond to the information that the process operator wants to get, and are automatically searched in compliance with a predetermined program.

For example, when the operator wishes to check whether or not the similar alarm has been generated in the past, the information are searched according to the type of alarm/object tag and then a list of alarms generated in the past is displayed.

Then, when the operator wishes to know from where the alarm is generated after the alarm is generated, the generation source of the alarm is displayed based on the event history.

When the operator wishes to know the trend of the object tag, the trends generated around an occurring time are displayed with using the historical data.

When the operator wishes to know the trend in the normal operation (e.g., yesterday), short-period trends are displayed.

When the operator wishes to know the trend in the normal operation (e.g., the same month the same day, last year), the short-period trends are also displayed.

When the operator wishes to know the trend within last one year, long-period trends are displayed.

When the operator wishes to know related tags of the equipments to which the object tag belongs, a list of the related tags is displayed based on a design drawing, or the like.

When the operator wishes to know the information of the equipment to which the object tag belongs, the information of the equipment is displayed based on the design drawing, or the like.

When the operator wishes to know the maintenance history of the equipment, the information of the maintenance history is displayed.

When the operator wishes to know the trend just after the maintenance of the equipment, the trends in the neighborhood of the maintenance period are displayed.

When the operator wishes to know what type of operation has been taken by the operator around an occurring time, the operation history is displayed.

When the operator wishes to know what type of operation has been applied to the object tag by the operator, the operation history is also displayed.

When the operator wishes to know what type of operation has been applied to the equipment, to which the object tag belongs, by the operator, the operation history is also displayed.

When the operator wishes to know the past production planning/actual results, a production planning/actual results database is displayed.

These displays are formatted in answer to the type of the alarm. The information are gathered from the information storing apparatus 24 in compliance with predetermined procedures, and displayed automatically on the related trend/ related event displaying section 22e.

In the related art, the operator searches plural pieces of data, which seem to be most suitable for the handling of the alarm, from the information storing apparatus 24 based on the operator's own experience in answer to the alarm, then displays the data on the displaying section, and then takes the measures by referring to the data.

In the embodiment, it is determined previously what type of information are displayed in what order at a point of time when the alarm is generated (the logic prepared based on the operator's experience), and then the optimum information are provided to the related trend/related event displaying section 22e in such order (In this case, the logic applied to display the information on the formatted operation displaying section is not discussed in the embodiment).

For example, if the historical data of the object tag is acquired from the process data database and then this historical data is displayed automatically, the operator can know a point of time at which the data change largely and can deduce a particular period.

That is, the phenomenon that the data are changed largely in the steady state is generated due to either the artificial cause such as a change of a set value, or the like or the occurrence of the abnormality.

Also, the operator can deduce a part of the causes that generate the abnormality (e.g., failure of a valve, or the like) by checking a short-period data change within a particular period.

Also, the operator can deduce the secular change, and the like (e.g., clogging of a pipe) by checking a long-period data change.

Also, the operator can decide a difference in what factors generates the failure, by comparing the data in a period during which the apparatus operates correctly with the data in a period during which the alarm is generated.

Also, the tags related to the object tag are searched based on the design drawing database by displaying automatically the trend of the object tag. Also, the operations taken by the operator at that time are searched from the operation history based on the object tag by displaying automatically the related tags as a list.

Also, the operation history is displayed automatically based on the contents of the alarm, then the maintenance information are searched from the equipment maintenance history based on the object tag and the design drawing, and then the maintenance information are displayed automatically.

The operator decides the treating measures based on these information that are offered automatically, and deals with the generated alarm.

In the embodiment, the unregistered process data registering section 22f for discriminating between the registered data and the unregistered data and then registering the unregistered data when the unregistered data is found is provided as the recurrence preventive measures. Then, if the tag that has not been registered in the historical data is found in the object tag and the related tag, such tag is registered automatically by this registering section. In this manner, since the unregistered data are stored, an improvement of a judgment or treatment efficiency can be attained when the abnormal condition is generated next time.

In this manner, in the embodiment, the formatted operations out of the recovering operations taken when the process abnormality occurs can be displayed automatically in compliance with the predetermined procedures, and also the short/long-period trends can be displayed by calculating the deviation or the moving average in a particular period. Therefore, the information collecting operation can be automated, and thus the alarm cause process can be specified exactly and immediately. As a result, an error of judgment caused due to lack of operator's skill/experience can be prevented.

The foregoing explanation of the present invention is made to simply show the particular embodiment for the purpose of description and illustration.

Therefore, it is apparent for the person skilled in the art that a number of variations and modifications can be applied without departing from an essential scope of the present invention. A scope of the present invention defined by the description set forth in claims should be interpreted to include the variation and the modification within the scope.

## Claims

1. A process abnormal condition recovering operation supporting system comprising:
an information storing apparatus (24) comprising:
- a data storing section (24i) for storing various data including historic process data, operation history information, equipment maintenance history information,
- a statistics calculating section (24g) for executing statistics calculation using stored data, and
- a data searching section (24h) for searching across the stored data,
an information searching apparatus (23) for collecting information from the information storing apparatus and for providing the collected information to an operation support apparatus (22),
the operation supporting apparatus (22) for receiving an alarm generated in a process abnormal condition and for collecting, in response to the reception of an alarm, information from the information storing apparatus (24) using the information searching apparatus (23),
wherein the operation supporting apparatus (22) comprises a displaying section (22e) for displaying collected information for supporting the execution of a process recovering operation,
**characterized in that**
the information storing apparatus (24) further stores information regarding predetermined alarm handling procedures,
**in that** the operation supporting apparatus (22) is adapted to automatically collect said information related to the alarm from the information storing apparatus (24) in compliance with a predetermined procedure that is predetermined for a type of the alarm, wherein the collected information includes process data related to the alarm, equipment information related to the alarm, operation history information related to the alarm, and maintenance information related to the alarm, and
**in that** the operation supporting apparatus (22) is further adapted to automatically display said collected information on the displaying section (22e) in an order predetermined by the operator.

2. The system according to claim 1, in that the statistics calculating section (24g) of the information storing apparatus (24) is adapted to calculate at least a deviation and a moving average over a particular period, and to determine short-period trends and long-period trends.

3. The system according to claim 1, in that the operation supporting apparatus (22) further comprises a discriminating section (22f) for discriminating between registered data and unregistered data,
and in that the operation supporting apparatus (22) is adapted to write data to the information storing apparatus, if the discriminating section (22f) has discriminated that the data is unregistered data.

## Patentansprüche

1. System, das einen Vorgang unterstützt, mit dem ein Prozess nach einem abnormalen Zustand wiederhergestellt wird, wobei es umfasst:
eine Informations-Speichervorrichtung (24), die umfasst:
- einen Daten-Speicherabschnitt (24i) zum Speichern verschiedener Daten, die Prozess-Verlaufsdaten, Betriebs-Verlaufsinformationen, Gerätewartungs-Verlaufsinformationen einschließen,
- einen Statistik-Berechnungsabschnitt (24g) zum Ausführen von Statistikberechnung unter Verwendung gespeicherter Daten, und
- einen Daten-Suchabschnitt (24h) zum Durchsuchen der gespeicherten Daten,
eine Informations-Suchvorrichtung (23) zum Erfassen von Informationen von der Informations-Speichervorrichtung und zum Bereitstellen der erfassten Informationen für eine Betriebsunterstützungsvorrichtung (22),
die Betriebsunterstützungsvorrichtung (22), die eine in einem abnormalen Zustand eines Prozesses erzeugte Warnmeldung empfängt und in Reaktion auf den Empfang einer Warnmeldung Informationen von der Informations-Speichervorrichtung (24) unter Verwendung der Informations-Suchvorrichtung (23) erfasst,
wobei die Betriebsunterstützungsvorrichtung (22) einen Anzeigeabschnitt (22e) zum Anzeigen erfasster Informationen umfasst, mit denen die Ausführung eines Vorgangs zum Wiederherstellen des Prozesses unterstützt wird,
**dadurch gekennzeichnet, dass**
die Informations-Speichervorrichtung (24) des Weiteren Informationen bezüglich vorgegebener Prozeduren für den Umgang mit Alarmmeldungen speichert,
die Betriebsunterstützungsvorrichtung (22) so eingerichtet ist, dass sie die Informationen bezüglich der Warnmeldung automatisch von der Informations-Speichervorrichtung (24) gemäß einer vorgegebenen Prozedur erfasst, die für einen Typ der Warnmeldung vorgegeben ist, wobei die erfassten Informationen Prozessdaten bezüglich der Warnmeldung, Prozessdaten bezüglich der Warnmeldung, Geräte-Informationen bezüglich der Warnmeldung, Betriebsverlaufsinformationen bezüglich der Warnmeldung sowie Wartungsinformationen bezüglich der Warnmeldung einschließen; und
die Betriebsunterstützungsvorrichtung (22) des Weiteren so eingerichtet ist, dass sie automatisch die erfassten Informationen an dem Anzeigeabschnitt (22) in einer von dem Bediener vorgegebenen Anordnung anzeigt.

2. System nach Anspruch 1, **dadurch gekennzeichnet, dass** der Statistik-Berechnungsabschnitt (24g) der Informations-Speichervorrichtung (24) so eingerichtet ist, dass er wenigstens eine Abweichung und einen gleitenden Durchschnitt über eine bestimmte Periode berechnet und Kurzzeit-Trends sowie Langzeit-Trends bestimmt.

3. System nach Anspruch 1, **dadurch gekennzeichnet, dass** die Funktionsunterstützungsvorrichtung (22) des Weiteren einen Unterscheidungsabschnitt (22f) umfasst, der registrierte Daten und nicht registrierte Daten erkennt,
und die Funktionsunterstützungsvorrichtung (22) so eingerichtet ist, dass sie Daten in die Informations-Speichereinrichtung schreibt, wenn der Unterscheidungsabschnitt (22f) erkannt hat, dass die Daten nicht registrierte Daten sind.

## Revendications

1. Système de support d'opération de récupération de condition de traitement anormale comprenant :
un appareil de stockage d'informations (24) comprenant :
- une section de stockage de données (24i) pour stocker diverses données comprenant des données de traitement d'historique, des informations d'historique d'opérations et des informations d'historique de maintenance,
- une section de calcul de statistiques (24g) pour exécuter des calculs de statistiques à l'aide de données stockées, et
- une section de recherche de données (24h) pour effectuer des recherches parmi les données stockées,
un appareil de recherche d'informations (23) pour collecter des informations provenant de l'appareil de stockage d'informations et pour fournir lesdites informations à un appareil de support d'opération (22),
l'appareil de support d'opération (22) pour recevoir une alarme générée dans une condition de traitement anormale et pour collecter, en réponse à la réception d'une alarme, des informations provenant de l'appareil de stockage d'informations (24) à l'aide de l'appareil de recherche d'informations (23),
l'appareil de support d'opération (22) comprenant une section d'affichage (22e) pour afficher des informations collectées en vue de prendre en charge l'exécution d'une opération de récupération de traitement,
**caractérisé en ce que**
l'appareil de stockage d'informations (24) stocke en outre des informations concernant des procédures de gestion d'alarme prédéfinies,
l'appareil de support d'opération (22) est conçu pour collecter automatiquement lesdites informations concernant l'alarme provenant de l'appareil de stockage d'informations (24) conformément à une procédure prédéfinie qui est déterminée pour un type de l'alarme, les informations collectées comprenant des données de traitement concernant l'alarme, des informations d'équipement concernant l'alarme, des informations d'historique d'informations concernant l'alarme, et des informations de maintenance concernant l'alarme, et
l'appareil de support d'opération (22) est en outre conçu pour afficher automatiquement lesdites informations collectées sur la section d'affichage (22e) dans un ordre préétabli par l'opérateur.

2. Système conformément à la revendication 1, dans lequel la section de calcul de statistiques (24g) de l'appareil de stockage d'informations (24) est conçue pour calculer au moins un écart et une moyenne de déplacement sur une période spécifique, et pour déterminer des tendances de période courte et des tendances de période longue.

3. Système conformément à la revendication 1, **caractérisé en ce que** l'appareil de support d'opération (22) comprend en outre une section de discrimination (22f) pour effectuer une discrimination entre des données enregistrées et des données non enregistrées,
et l'appareil de support d'opération (22) est conçu pour écrire des données dans l'appareil de stockage d'informations, si la section de discrimination (22f) a effectué une discrimination selon laquelle les données sont des données non enregistrées.
